# DEMANDE DE BREVET EUROPEEN

(11) **EP 1 508 477 A1**
(43) Date de publication de la demande: **23.02.2005**
(21) Numéro de dépôt: 04300548.7
(22) Date de dépôt: 19.08.2004
(51) Int. Cl.: B60R 9/06

(54) **Plateau de chargement d'un coffre de véhicule automobile**

(30) Priorité: 22.08.2003 FR 0310117
(71) Demandeur: Renault s.a.s., 92100 Boulogne Billancourt (FR)
(72) Inventeur: Maiore, Stéphane, 78117 Chateaufort (FR); Pastourel, Dominique, 91790 Boissy sous Saint Yon (FR)

(57) **Abrégé**

Plateau de chargement (20) d'un coffre (1) de véhicule automobile, délimité au moins par des parois latérales (1), une paroi transversale avant (3), et une paroi transversale arrière (4), formée par un ouvrant (10), ledit plateau (20) pouvant se déplacer d'une position de transport, où le plateau (20) est partiellement ou totalement encastré entre au moins un élément fixe (11) localisé à l'arrière du véhicule, et qui interdit le coulissement du plateau (20) selon la direction du plan formé par ledit plateau dans sa position de transport, vers une position reculée et un élément de plancher (24) complémentaire au plan défini par le plateau (20), et réciproquement, caractérisé en ce que l'ouvrant (10) comporte au moins une bielle de liaison (13) avec le plateau (20), permettant, d'entraîner, pendant le déplacement dudit ouvrant (10), ledit plateau (20) de la position de transport vers la position reculée, localisée en partie au-dessus de l'élément fixe (11).

## Description

L'invention concerne un plateau de chargement d'un coffre de véhicule automobile, et plus particulièrement un plateau ayant au moins une position facilitant le chargement couplé à l'ouverture de la porte de coffre.

Les véhicules automobiles comportent en général des coffres destinés à recevoir des charges diverses. Afin d'effectuer le chargement ou le déchargement sans avoir de difficultés à sortir les objets localisés au fond du coffre, certains véhicules comportent des plateaux de chargement coulissants, tels que décrit dans la publication DE-A-196 19 126. Afin de pouvoir faire coulisser le plateau au-dessus de l'obstacle formé par le hayon, ou la partie de hayon, en position ouvert il est nécessaire que les rails de guidage du plateau soient localisés suffisamment haut.

Un tel agencement des rails du plateau fait perdre une place précieuse pour le volume de chargement, en particulier dans la partie située au-dessous du plateau de chargement.

La publication US-B-6,273,487 décrit un plateau de chargement coulissant qui comporte une position de transport du chargement où le plateau est dans le coffre du véhicule et une position, de déchargement ou de chargement, où le plateau est sorti. Afin de faciliter la sortie du plateau et de limiter la perte de place dans la partie inférieure du coffre la publication, ci-dessus, propose d'escamoter la partie inférieure de l'ouvrant arrière avant de faire sortir le plateau. Le plateau peut-être placé dans le coffre de manière à ce qu'il soit dans le prolongement d'une partie du plancher, ce dernier comporte alors une rampe inclinée pour faire passer l'extrémité avant du plateau à un niveau supérieur puis ensuite l'extrémité arrière, permettant ainsi la sortie du plateau.

Cet agencement nécessite un temps important pour sortir le plateau étant donné la nécessité d'obtenir l'escamotage complet de la partie basse du hayon pour pouvoir extraire le plateau. De plus, lorsque le plateau est encastré la transition avec le niveau supérieur est réalise par une inclinaison du ce qui peut faire déplacer des objets et les faire quitter le plateau ou renverser leur contenu.

Il est à noter que le coulissement des plateaux présenté dans les publications ci-dessus est indépendant du déplacement de la partie basse du hayon ce qui permet audit plateau d'avoir des mouvements de coulissement lors du transport ou lors d'un accident. Afin de limiter ce coulissement non souhaité il peut être nécessaire d'utiliser un moyen de verrouillage complémentaire, ce qui augmente le prix de cette prestation. De plus lorsque la partie basse du hayon est d'une dimension correspondant, en position de fermeture, sensiblement au milieu de la hauteur du véhicule, cette partie basse devient d'une longueur importante en position ouverture et nécessite donc de se pencher pour aller chercher le plateau et le faire coulisser ou d'utiliser des moyens motorisés destinés à l'entraînement dudit plateau ce qui est très coûteux.

Afin de pallier ces problèmes l'invention a pour objet un plateau coulissant encastré dans le coffre, et qui passe d'une position de transport vers une position de chargement ou de déchargement, localisé à un niveau supérieur, sans avoir une inclinaison du plateau.

L'invention a également pour objet, un plateau coulissant dont le déplacement est lié mécaniquement à l'ouverture de la partie basse du hayon, assurant ainsi, une sécurité accrue pendant le transport et un accès rapide au chargement.

Selon une caractéristique de l'invention, l'ouvrant comporte au moins une bielle de liaison avec le plateau, permettant d'entraîner, pendant le déplacement dudit ouvrant, ledit plateau de la position de transport vers la position reculée, localisée en partie au-dessus de l'élément fixe.

Selon une autre caractéristique de l'invention, le plateau coopère avec des rails avant et arriére, portés par les parois latérales, qui comportent une pente permettant le déplacement du plateau de la position de transport à la position reculée, et réciproquement, parallèlement à la position départ.

Selon une autre caractéristique de l'invention, la bielle de liaison comporte une extrémité supérieure montée à pivotement autour d'un axe transversal supérieur porté par le hayon et une extrémité inférieure montée à pivotement autour d'un axe transversal inférieur porté par le plateau coulissant.

Selon une autre caractéristique de l'invention, l'axe transversal inférieur porté par le plateau coulissant forme un axe d'un élément de guidage qui coopère avec an rail.

Selon une autre caractéristique de l'invention, la liaison, réalisée par la bielle de liaison, entre l'ouvrant et le plateau est déconnectable.

Selon une autre caractéristique de l'invention, l'ouvrant est monté à pivotement autour d'un axe transversal, orienté selon la direction T.

Selon une autre caractéristique de l'invention, l'ouvrant est monté à pivotement autour d'un axe vertical, orienté selon la direction V.

Selon une autre caractéristique de l'invention, le plateau comporte un filet de retenue du chargement.

Selon une autre caractéristique de l'invention, le filet est monté sur un enrouleur dont l'axe d'enroulement est disposé suivant la direction V à un coin avant du plateau. D'autres caractéristiques et avantages de l'invention apparaîtront à la lecture de la description d'exemples de réalisation d'un plateau de chargement pour véhicule automobile aux dessins annexés dans lesquels :
- La figure 1 représente une vue perspective d'un coffre comportant un poteau selon l'invention, dans une position de transport.
- La figure 2 représente une vue perspective d'un coffre comportant un plateau selon l'invention, dans une position reculée du plateau.
- La figure 3 représente une vue en élévation latérale du plateau selon l'invention en position de transport et en position reculée.

Dans la description qui suit, il sera utilisé le repère V, L, T correspondant respectivement aux directions Verticale, Longitudinale et Transversale. Les termes inférieur et supérieur seront à comprendre, selon la direction V. Les termes avant et arrière seront à comprendre par rapport à la localisation classique de la partie avant d'un véhicule selon la direction longitudinale L.

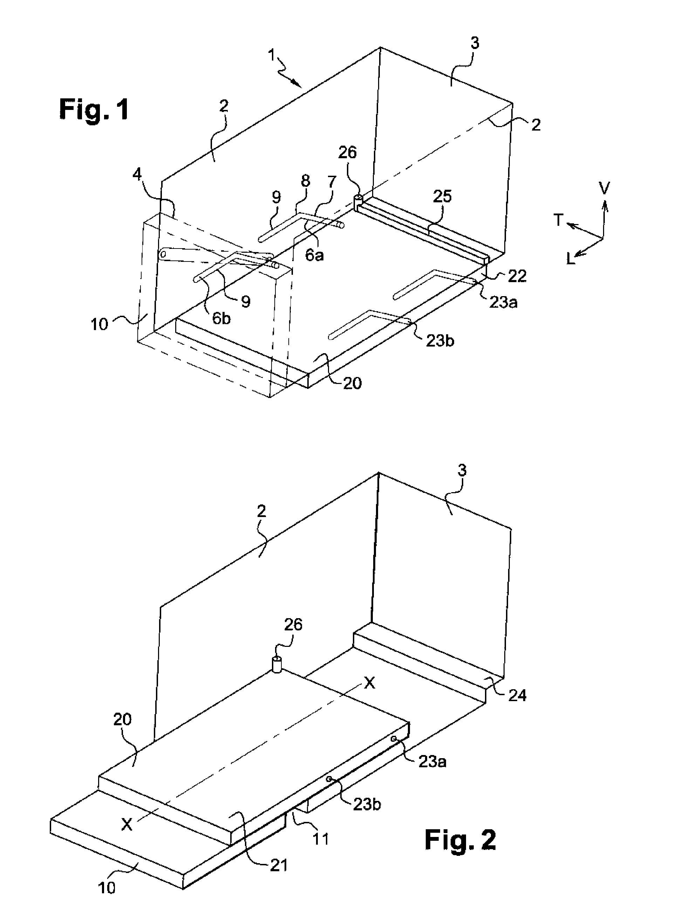

Tel que représenté à la figure 1, le coffre 1 du véhicule est délimité au moins par des parois latérales 2, une paroi transversale avant 3, pouvant être formée par exemple par une banquette arrière, et une paroi transversale arrière 4 formée par un ouvrant 10 qui, dans notre exemple de réalisation, comporte au moins une partie basse dont la position d'ouverture permet le déplacement d'un plateau coulissant 20 qui couvre au moins en partie un plancher 5 formant une partie de la structure localisé sous le véhicule.

Le coffre 1 comporte un plancher de charge formé par au moins le plateau 20. Ce plateau 20 comporte une surface plane 21, formant le plancher, et au moins deux parties latérales 22, réparties de part et d'autre de la surface plane 21, portant chacune des éléments, avant 23a et arrière 23b, de guidage, dans des rails 6a et 6b, du déplacement du plateau. Dans la description qui suit nous décrirons uniquement les éléments de guidage 23a et 23b et les rails 6a et 6b d'un côté, l'ensemble du plateau étarst symétrique par rapport à l'axe médian XX orienté selon la direction L. Les éléments de guidage, avant 23a et arrière 23b, coopèrent respectivement avec des rails avant 6a et arrière 6b disposés sur les parois latérales 2 du véhicule. Les rails avant 6a et arrière 6b comportent une première partie formant une pente 7 dirigée de l'avant vers l'arrière et de la partie inférieure vers la partie supérieure du véhicule. La partie supérieure 8 de la pente 7 est localisée à un niveau permettant le déplacement du plateau 20 au-dessus d'une partie fixe 11 du véhicule ou des axes 12 de la partie basse du hayon. La pente 7 réalisée sur les rails avant 6a et arrière 6b permet un déplacement du plateau 20 parallèlement à sa position de départ, à cette fin la pente 7 peut être rectiligne ou formée par une courbe. Les éléments de guidage 23a et 23b peuvent être réalisés par des galets, par exemple.

La pente 7 est prolongée par une partie de rail rectiligne 9 orientée parallèlement au plan formé par la surface plane 21 localisée en position de chargement ou de déchargement.

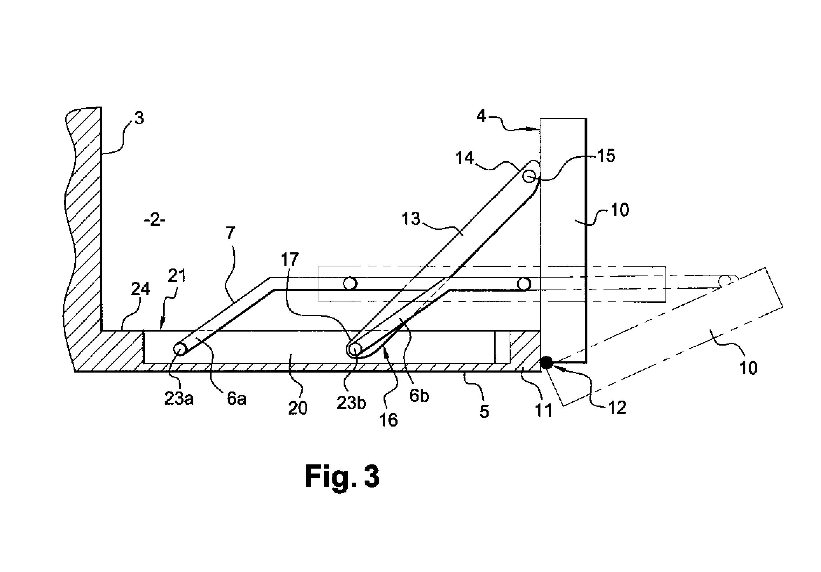

Tel que représenté à la figure 2, l'ouvrant 10 est monté à pivotement autour d'un axe transversal 12, orienté selon la direction T, et formé par des charnières portées par une partie inférieure du véhicule. L'ouvrant 10 comporte une position de fermeture qui clôt le coffre 1 et une position d'ouverture qui permet un accès au plateau coulissant 20, tel que représenté à la figure 3.

De plus l'ouvrant 10 comporte deux bielles de liaison 13, réparties de part et d'autre du hayon 10 selon la direction T, qui comportent chacune une extrémité supérieure 14 montée à pivotement autour d'un axe transversal supérieur 15 porté par le hayon 10 et une extrémité inférieure 16 montée à pivotement autour d'un axe transversal inférieur 17 porté, par le plateau coulissant 20. Il est possible de prévoir l'utilisation d'une seule bielle de liaison 13, l'utilisation de deux bielles de liaison 13 améliorant le guidage du plateau 20 lors du coulissement. Les axes transversaux inférieurs 17 portés par le plateau coulissant 20 peuvent également formés les axes des éléments de guidage 23a et 23b. Dans notre exemple de réalisation les axes des éléments de guidage arrière 23b sont formés par les axes transversaux inférieurs 17.

Tel que représenté à la figure 3, le plateau coulissant comporte deux positions :
- une position dite de transport où le plateau 20 est partiellement ou totalement encastré entre au moins un élément fixe 11 délimitant l'arrière du véhicule ou formant un élément d'articulation de la partie basse du hayon 10, et qui interdit le coulissement du plateau 20 selon la direction du plan de réception du chargement, et/ou un élément de plancher 24 pouvant être complémentaire au plan défini par le plateau.
- une position reculée, dite de chargement ou de déchargement, ou le plateau 20 passe de la position de transport vers une position localisée à un niveau supérieur au-dessus d'éléments fixes 11 délimitant l'arrière du véhicule ou d'élément d'articulation de la partie basse du hayon.

Lorsque l'utilisateur ouvre la partie basse du hayon 10, le pivotement de ce dernier autour de l'axe 12 entraîne un déplacement des axes transversaux supérieurs 15 qui induit par l'intermédiaire des bielles de liaison 13, un déplacement des axes transversaux mférieurs 16 qui produit un effort de traction sur le plateau coulissant 20. Cette traction déplace le plateau 20 selon une trajectoire définie par la coopération des éléments de guidage 23a et 23b dans les rails 6a et 6b. La partie basse du hayon 10 forme un levier de commande et d'entraînement du plateau coulissant 20.

Afin de mettre le plateau coulissant 20 dans sa position de transport, il suffit d'effectuer le mouvement inverse en refermant la partie basse du hayon 20.

Afin d'améliorer la tenue du chargement le plateau 20 peut comporter un filet de retenue 25. Tel que représenté aux figures 1 et 2, le filet 25 peut-être monté sur un enrouleur 26 afin de le rendre escamotable. Pour limiter l'encombrement du filet 25, l'enrouleur 26 est disposé de manière que l'axe d'enroulement soit disposé suivant la direction V à un coin avant du plateau 20. Le déploiement du filet 25 s'effectue par le déroulement selon la direction T, l'accrochage étant réalisé sur la paroi latérale 2 opposée.

La liaison entre l'ouvrant 10 et le plateau 20 peut être déconnectable afin de pouvoir faciliter le chargement d'un objet long dépassant les dimensions de la surface plane. La déconnexion peut être effectuée simplement, par exemple en faisant coulisser les axes transversaux supérieurs 15 reliant les bielles de liaison 13 au hayon 10 avant l'ouverture de ce dernier. Les axes 15 retirés peuvent servir à immobiliser les bielles de liaison 13 sur les parois latérales afin que lesdites bielles de liaison 13 ne tombent pas lors de l'ouverture de la partie basse du hayon 10.

Selon une variante de l'invention, le pivotement de la partie basse du hayon est motorisé.

Dans une autre version de l'invention, non représentée, l'ouvrant peut se déplacer latéralement, autour d'axes orientés selon une direction V, ou suivant des rails. La ou les bielles de liaison pouvant alors permettre, au niveau de la coopération avec le plateau coulissant, un déplacement selon la direction V.

L'invention peut être également appliquée, de manière équivalente, sur un véhicule comportant un chargement latéral.

## Revendications

1. Plateau de chargement (20) d'un coffre (1) de véhicule automobile, délimité au moins par des parois latérales (1), une paroi transversale avant (3), et. une paroi transversale arrière (4), formée par un ouvrant (10), ledit plateau (20) pouvant se déplacer d'une position de transport, où le plateau (20) est partiellement ou totalement, encastré entre au moins un élément fixe (11) localisé à l'arrière du véhicule, et qui interdit le coulissement du plateau (20) selon la direction du plan formé par ledit plateau dans sa position de transport, vers une position reculée, et réciproquement, **caractérisé en ce que** l'ouvrant (10) comporte au moins une bielle de liaison (13) avec le plateau (20), permettant d'entraîner, pendant le déplacement dudit ouvrant (10), ledit plateau (20) de la position de transport vers la position reculée, localisée en partie au-dessus de l'élément fixe (11).

2. Plateau de chargement, selon la revendication 1, **caractérisé en ce qu'**il coopère avec des rails avant (6a) et arrière (6b), portés par les parois latérales (2), qui comportent une pente (7) permettant le déplacement du plateau (20) de la position de transport à la position reculée, et réciproquement, parallèlement, à la position départ.

3. Plateau de chargement, selon l'une quelconque des revendications précédentes, **caractérisé en ce que** la bielle de liaison (13) comporte une extrémité supérieure (14) montée à pivotement autour d'un axe transversal supérieur (15) porté par l'ouvrant (10) et une extrémité inférieure (16) montée à pivotement autour d'un axe transversal inférieur (17) porté par le plateau coulissant (20).

4. Plateau de chargement, selon la revendication 3, **caractérise en ce que** l'axe transversal inférieur (17) porté par le plateau coulissant (20) forme un axe d'un élément de guidage (23a, 23b) qui coopère avec un rail (6a, 6b).

5. Plateau de chargement selon l'une quelconque des revendications précédentes, **caractérise en ce que** la liaison, réalisée par la bielle de liaison (13), entre l'ouvrant (10) et le plateau (20) est déconnectable.

6. Plateau de chargement, selon l'une quelconque des revendications précédentes, **caractérisé, en ce que** l'ouvrant (10) est monté à pivotement autour d'un axe transversal (12), orienté selon la direction T.

7. Plateau de chargement, selon l'une quelconque des revendications précédentes, **caractérisé en ce que** l'ouvrant est monté à pivotement autour d'un axe vertical, orienté selon la direction V.

8. Plateau de chargement, selon l'une quelconque des revendications précédentes, **caractérisé en ce qu'**il comporte un filet de retenue (25) du chargement.

9. Plateau de chargement, selon la revendication 8, **caractérisé en ce que** le filet (2.5) est monté sur un enrouleur (26) dont l'axe, d'enroulement est disposé suivant la direction V à un coin avant du plateau (20).
